# EUROPÄISCHE PATENTSCHRIFT

(11) **EP 2 546 119 B1**
(45) Veröffentlichungstag und Bekanntmachung des Hinweises auf die Patenterteilung: **20.05.2015**
(21) Anmeldenummer: 12004617.2
(22) Anmeldetag: 20.06.2012
(51) Int. Cl.: B61D 17/22

(54) **Flächenförmiges oder im Querschnitt kasten- oder U-förmig umlaufendes Verbindungselement zwischen zwei gelenkig miteinander verbundenen Fahrzeugen oder Vordach einer Fluggastbrücke oder -treppe**
Connection element between two vehicles joined together with an articulated connection which is flat or box or U shaped in cross section or porch of a passenger bridge or stairs
Elément de raccordement plat ou en forme de caisse ou de U entre deux véhicules reliés de manière articulée ou avant-toit d'une passerelle ou d'un escalier d'embarquement

(30) Priorität: 14.07.2011 DE 102011107370
(43) Veröffentlichungstag der Anmeldung: 16.01.2013
(73) Patentinhaber: Hübner GmbH & Co. KG, 34123 Kassel (DE)
(72) Erfinder: Busch, Thomas, 34359 Reinhardshagen (DE)
(74) Vertreter: Walther, Walther & Hinz GbR

(56) Entgegenhaltungen:
- EP-B1- 1 391 329
- DE-A1- 4 007 862
- DE-B3- 10 324 524
- DE-U1-202010 013 536
- FR-A1- 2 919 630
- KR-A- 20100 116 836

## Beschreibung

Die Erfindung betrifft ein flächenförmiges oder im Querschnitt kasten- oder U-förmig umlaufendes Verbindungselement zwischen zwei gelenkig miteinander verbundenen Fahrzeugen oder Vordach einer Fluggastbrücke oder -treppe, wobei das Verbindungselement oder das Vordach mindestens einen flächigen mit einem Elastomer beschichteten Festigkeitsträger aufweist, wobei der Festigkeitsträger eine Vielzahl von Fäden oder Garnen aufweist.

Die übliche Form eines Verbindungselementes zwischen zwei gelenkig miteinander verbundenen Fahrzeugen ist in der Form eines im Querschnitt U-förmigen oder kastenartig umlaufenden Balges ausgebildet. Der Balg umgibt hierbei eine Übergangsbrücke oder Plattform zwischen zwei gelenkig miteinander verbundenen Fahrzeugen und sorgt dafür, dass die Passagiere im Inneren des Übergangs vor äußeren Einflüssen geschützt sind. Darüber hinaus ist bei einem im Querschnitt U-förmigen Balg bekannt, dass die beiden Schenkel des im Querschnitt U-förmigen Balges durch einen Boden miteinander in Verbindung stehen. Der Boden kann hierbei lösbar mit dem im Querschnitt U-förmigen Balg verbindbar sein.

Des Weiteren ist bekannt, zwischen zwei gelenkig miteinander verbundenen Fahrzeugen im Bereich der gelenkigen Verbindung als flächenförmiges Verbindungselement Seitenwände vorzusehen, wobei die Seitenwände im Wesentlichen konturgleich zu den Seitenwänden der Wagenkästen der beiden gelenkig miteinander verbundenen Fahrzeuge verlaufen. Solche Seitenwände haben häufig mehrere Funktionen; so sollen sie zum einen dazu dienen, bei den Fahrzeugen, die lediglich gelenkig miteinander gekuppelt sind, dafür zu sorgen, dass Unbefugte nicht in den Raum zwischen den beiden Fahrzeugteilen gelangen können. Zum anderen dienen derartige Seitenwände auch dazu, die Strömungsverhältnisse im Bereich der Verbindung zweier Fahrzeugteile zu verbessern, wenn solche Seitenwände mit der Außenwandung der Fahrzeuge konturgleich verlaufen. Gleiches gilt entsprechend für die Anordnung eines Deckenelements im Bereich der gelenkigen Verbindung zweier Fahrzeugteile. Solche flächenförmigen Verbindungselemente weisen, um eine entsprechende Dehnfähigkeit bereitstellen zu können, eine Anzahl von Wellen oder Falten auf.

Des Weiteren ist bekannt, dass gelenkig miteinander verbundene Fahrzeuge, beispielsweise eines Schienenfahrzeuges oder auch eines Straßenfahrzeuges, den verschiedensten Bewegungsarten unterzogen werden, als da sind Wank-, Nick- und Knickbewegungen sowie auch überlagerten Bewegungen der zuvor beschriebenen Bewegungsarten; gegebenenfalls kommen noch Bewegungen durch Querversatz bei Schienenfahrzeugen hinzu. Im Rahmen dieser Bewegungen, die ein solches Verbindungselement ausüben können muss, finden sich an einigen Stellen Bereiche extremer Dehnung, wohingegen andere Stellen entsprechend gestaucht sind.

Dies soll beispielhaft bei einem Balg als Teil eines Übergangs zwischen zwei gelenkig miteinander verbundenen Fahrzeugen erläutert werden. So wird insbesondere dann, wenn beispielsweise ein Gelenkbus durch eine Kurve fährt, der kurvenaußenseitige Bereich des Balges extrem gedehnt. Bislang ist man davon ausgegangen, dass die extreme Dehnung im Bereich der Kurvenaußenseite eine hohe Anzahl von Wellen oder Falten bedingt, um durch die entsprechende Anzahl an Falten oder Wellen die erforderliche Auszugslänge bereitzustellen. Gleiches gilt grundsätzlich auch für gesonderte Seitenwand-, Dach- oder Bodenverbindungen.

Insbesondere im Bereich des Übergangs von der Seitenwand zum Dach bzw. von der Seitenwand zum Boden wird einem solchen Balg eine hohe Elastizität abverlangt. Um in diesem Bereich eine entsprechende Dehnfähigkeit bereitstellen zu können, ist man dazu übergegangen, im Bereich des Übergangs von den Seitenwänden zur Decke oder zum Boden Einsatzwellen oder Einsatzfalten vorzusehen, um insofern die entsprechende Dehnfähigkeit des Balges gewährleisten zu können (EP 1391329B1).

Insbesondere bei Bälgen hat sich jedoch herausgestellt, dass je mehr Falten oder Wellen ein solcher Balg aufweist, er umso eher aufgrund des Gewichts zum Durchhängen neigt. Insofern ist aus dem Stand der Technik auch bereits bekannt, am Wagenkasten entsprechende Galgen anzuordnen, um hier den Balg gelenkig aufzuhängen. Insofern ist man bestrebt, die Anzahl an Wellen oder Falten möglichst gering zu halten,wobei jedoch aufgrund äußerer Zwänge insbesondere in Hinblick auf die zu durchfahrenden Kurvenradien eine bestimmte Anzahl an Falten oder Wellen bei einem solchen Balg bereitgestellt werden muss.

Insofern ist aus der DE 10324524 B3 auch bekannt, Gewebe für Bälge aus elastischen Garnen oder Fäden herzustellen, z. B. auf Polyamidbasis, auf Copolyesterbasis oder auf Urethanbasis. Für die Beschichtung ist ein Silikonelastomer vorgesehen. Nachteilig ist allerdings die geringe Witterungsbeständigkeit des Gewebes, wobei im Brandfall in Abhängigkeit des verwendeten Materials toxische Gase entstehen können und auch eine starke Rauchentwicklung möglich ist, obwohl die Beschichtung aus Silikon besteht.

Gegenstand der Erfindung ist ebenfalls das Vordach einer Fluggastbrücke oder -treppe. Das Vordach einer solchen Fluggastbrücke oder -treppe muss sich an die Kontur des Flugzeugrumpfes im Bereich der Tür eines solchen Flugzeuges anschmiegen können. Hierzu ist es erforderlich, dass das Vordach in bestimmten Bereichen weiter ausgestellt werden können muss als in anderen Bereichen. Das heißt, es muss, um die entsprechende Dehnfähigkeit bereitstellen zu können, ein solches Vordach mit einer Vielzahl an einzelnen Balgelementen in Form von Falten oder Wellen versehen sein.

Die der Erfindung zugrunde liegende Aufgabe besteht demzufolge darin, ein Verbindungselement der eingangs genannten Art oder ein Vordach einer Fluggastbrücke oder -treppe bereitzustellen, das unter Verwendung mindestens eines flächigen Festigkeitsträgers einerseits nur ein geringes Gewicht bei andererseits gleichzeitig erhöhter Elastizität oder Dehnfähigkeit aufweist und darüber hinaus witterungsbeständig, insbesondere UVbeständig ist, im Brandfall keine oder nur im geringen Umfang toxische Gase entwickelt und darüber hinaus die Rauchentwicklung minimiert werden kann.

Zur Lösung der Aufgabe wird erfindungsgemäß vorgeschlagen, dass die Fäden oder Garne des Festigkeitsträgers aus vernetzten Silikonkautschuk ausgebildet sind und insbesondere ein Modul im Bereich von 10 bis 100^{cN}/800 % vorzugsweise 20 bis 80 ^{cN}/800 % Dehnung aufweisen. Das heißt, die einzelnen Fäden oder Garne sind gummielastisch ausgebildet und zeigen in der Form eines Gewebes, Gewirkes oder Geleges eine hohe Elastizität in insbesondere zwei Raumrichtungen. Insbesondere bei einem Festigkeitsträger in Form eines Gewebes kann vorgesehen sein, die Kettfäden und/oder die Schussfäden aus einem solchen elastischen Material in dem oben genannten Modulbereich herzustellen. So weist ein Silikonfaden einen Modulwert von ca. 22-25^{cN}/800 % Dehnung auf. Werden beispielsweise nur die Schussfäden aus solchen hoch elastischen Fäden hergestellt, die Kettfäden jedoch aus Silikonfäden geringerer Elastizität, dann ergibt sich insofern ein im Wesentlichen monodirektional elastisches Gewebe, im Gegensatz zu einem bidirektional elastischen Gewebe, bei dem sowohl die Schussfäden als auch die Kettfäden die gleiche Elastizität aufweisen.

Nach einem weiteren Merkmal der Erfindung ist vorgesehen, dass die Fäden eine Ummantelung aus einem Kunststoff aufweisen, der nicht dem Material der Seele des Fadens entspricht. Dies vor folgendem Hintergrund: Fäden aus einem Silikonelastomer sind insbesondere beim Weben oder Wirken schwer zu verarbeiten. Dies deshalb, weil solche Fäden aus einem Silikonelastomer eine sehr rutschhemmende Oberfläche aufweisen. Durch die Verwendung einer Ummantelung aus Kunststoff kann durch die Wahl eines geeigneten Kunststoffes die Reibung auf der Oberfläche eines solchen Fadens oder Garnes reduziert werden. In diesem Zusammenhang ist im Einzelnen des Weiteren vorgesehen, dass die Ummantelung durch einen den Faden, also die Seele umgebenden weiteren Faden gebildet ist. Das heißt, dass der beispielsweise aus einem Silikonelastomer hergestellte Faden (Seele), der von einem Faden aus Polyamid oder Polyethylen umwickelt ist, sehr gute Gleiteigenschaften aufweist. Denkbar ist auch für den umhüllenden Kunststoff, insbesondere den umhüllenden Faden, einen solchen aus einem schwer entflammbaren Material wie z. B. Aramiden, Glasfasern oder Kohlefasern zu wickeln bzw. einen entsprechenden Kunststoff auszuwählen, der auf den Faden aufgebracht werden kann, beispielsweise im Tauchverfahren, d. h. der Silikonfaden erhält eine gleitfähige Oberfläche, die es erlaubt, einen solchen Faden in ein Gewebe, Gewirke oder Gelege zu verarbeiten. Solche Fäden zur Ummantelung des Silikonfadens aus Aramid, Glasfasern oder Kohlefasern weisen neben einer verminderten Oberflächenreibung auch gleichzeitig flammhemmende Eigenschaften auf. Hieraus erfolgt im Weiteren, dass ein derart hergestellter flächenförmiger Festigkeitsträger nicht nur hochelastisch ausgebildet ist, sondern darüber hinaus auch hervorragende flammhemmende Eigenschaften aufweist, so dass ein solcher Festigkeitsträger sich auch für die Herstellung von Bälgen oder Verbindungselementen für den Schienenfahrzeugbereich eignet, wo erhöhte Anforderungen an die Brandsicherheit gestellt werden.

Es wurde bereits darauf hingewiesen, dass das im Querschnitt kasten- oder U-förmig umlaufende Verbindungselement als Teil eines Übergangs zwischen zwei gelenkig miteinander verbundenen Fahrzeugen als Balg ausgebildet ist. Ein solcher Balg weist einzelne Falten oder Wellen auf, wobei sich herausgestellt hat, dass aufgrund der erhöhten Dehnfähigkeit des Festigkeitsträgers, da er aus Silikonfäden hergestellt ist, weniger als die Hälfte der Wellen oder Falten notwendig sind als dies bei einem herkömmlichen Balg der Fall ist. Das heißt, es wird ein erheblicher Teil der Dehnung durch das Material des Balges selbst bereitgestellt. Dies unter Berücksichtigung der Tatsache, dass die Fäden selbst in Abhängigkeit von der auf dem Faden oder das Garn ausgeübten Zugkraft eine Dehnfähigkeit von mehreren 100 % aufweisen. Selbst im verarbeiteten Zustand solcher Fäden oder Garne zu flächenförmigen Festigkeitsträgern besitzen diese Festigkeitsträger immer noch eine Dehnfähigkeit von 100 bis nahezu 400 %. Unter bestimmten Umständen können Falten oder Wellen bei einem solchen Balg auch gänzlich entfallen, d. h., ein solcher Balg weist umlaufend eine glatte Oberfläche auf.

Des Weiteren ist nach einem Merkmal der Erfindung vorgesehen, dass das flächenförmige Verbindungselement als Seitenwand und/oder Decke und/oder Boden zwischen zwei gelenkig miteinander verbundenen Fahrzeugen ausgebildet ist. Diese flächenförmigen Verbindungselemente können einzelne Wellen oder Falten aufweisen, sie können aber auch in Abhängigkeit von der erforderlichen Dehnfähigkeit als glatte Tücher ausgebildet sein, also ohne Wellen oder Falten. Dies vor folgendem Hintergrund: Bekannt ist beispielsweise bei Hochgeschwindigkeitsschienenfahrzeugen, wie z. B. dem ICE, dass der Balg als Teil des Überganges mit einem nicht unerheblichen radialen Abstand zur Wandung der Wagenkästen verläuft. Durch den radialen Abstand des Balges zur Seitenwandung der Wagenkästen entsteht im Bereich des Übergangs eine erhöhte Wirbelbildung, die nicht unerheblich zur Erhöhung des Strömungswiderstandes beiträgt. Abhilfe könnte hierbei nicht nur dadurch geschaffen werden, dass ein Balg im Bereich der Außenwandung der Wagenkästen verläuft, sondern bereits dadurch, dass Seitenwände der erfindungsgemäßen Art Verwendung finden, die konturgleich mit der Außenwandung des Wagenkastens verlaufen. Insbesondere kann auch ein flächenförmiges Verbindungselement, wie zuvor beschrieben, balgartig ausgebildet sein, und zwar nach Art eines Wellen- oder Faltenbalges, d.h. einzelne Wellen oder Falten aufweisen. Denkbar ist ebenfalls eine Kombination eines herkömmlichen Balges oder Teilen eines herkömmlichen Balges mit solchen flächenförmigen Verbindungselementen, beispielsweise dadurch, dass der Boden als Einsetzboden unter Verwendung des flächenförmigen Festigkeitsträgers mit den zuvor beschriebenen hochelastischen Fäden oder Garnen aus Silikon hergestellt ist, und insofern Teil eines herkömmlich hergestellten Balges ist. Ein solcher Boden als z.B. Bodentuch könnte im gespannten Zustand zwischen den Fahrzeugen eingebaut werden. Der Boden würde dann bei einer Stauchung, wenn zum Beispiel eine Kuppe überfahren wird, nicht mehr durchhängen, was die Gefahr minimiert, dass der Boden des Balges mit dem Fahrweg in Berührung gelangt. Gleiches gilt für Bereiche des Balges, die im normalen Betrieb einer erhöhten Dehnung unterworfen sind, wie dies beispielsweise der Fall ist bei einem Balg im Bereich des Übergangs beispielsweise von den Seitenwänden zur Decke oder auch zum Boden.

Gegenstand der Erfindung ist auch ein Vordach einer Fluggastbrücke oder -treppe als im Querschnitt kasten- oder U-förmig umlaufendes Verbindungselement. Hierbei kann das Vordach nicht nur balgartig, als mit Wellen oder Falten, ausgebildet sein, vielmehr kann es ausreichend sein, das Vordach durch ein glattes Tuch zu bilden, das die erforderliche Dehnfähigkeit aus sich heraus bereitstellt.

Bei einem solchen flächenförmigen oder im Querschnitt kasten- oder U-förmig umlaufenden balgartigen Verbindungselement mit einzelnen Wellen oder Falten sind zur Bildung der einzelnen Falten oder Wellen, Balgrahmen oder Rahmenleisten vorgesehen, die entsprechend der Kontur des Verbindungselementes ausgebildet sind. Die Balgrahmen weisen im Querschnitt eine Form nach Art eines U-Profiles auf und erfassen insofern die Materialbahnen der mit einem Elastomer, insbesondere einem Silikon beschichteten flächenförmigen Festigkeitsträger im Übergangsbereich von einer Welle oder Falte zur nächsten Welle oder Falte.

Insbesondere ein Balg, sei es ein Wellen- oder Faltenbalg, der einen Festigkeitsträger aufweist, der aus Fäden oder Garnen mit einem Silikonelastomer hergestellt ist, wobei der Festigkeitsträger insbesondere mit einem Silikonelastomer beschichtet ist, besitzt zusammengefasst eine ganze Reihe von Vorteilen gegenüber einem herkömmlichen Balg. Durch die erhöhte Dehnfähigkeit wird eine wesentlich geringere Anzahl an Falten oder Wellen benötigt, was eine geringere freie Länge des Balges bewirkt und was wiederum Gewicht spart, wodurch ein Durchhängen eines solchen Balges vermieden wird. Gleichfalls vermindert ist die Anzahl der umlaufenden im Querschnitt U-profilförmigen Balgrahmen, was ebenfalls zu einer Verminderung des Gewichts beiträgt, aber auch Kosten spart, da solche Balgrahmen relativ aufwendig in der Herstellung und insofern teuer sind. Aufgrund der geringeren Länge des Balges wird nicht nur das Durchhängen bei Geradeausfahrt vermindert, es hat sich auch herausgestellt, dass bei Kurvenfahrt der Balg auf der Kurveninnenseite nicht durchhängt. Wenn der Balg nicht oder nur in sehr geringem Maße durchhängt, kann auch eine verhältnismäßig niedrigere Bauhöhe des Fahrzeugs insgesamt verwirklicht werden. Dies ist insbesondere von Interesse, weil damit der Zustieg in das Fahrzeug erleichtert wird.

Weiterhin ist der Balg auch in erhöhtem Maße vandalismussicher, und zwar insofern, als durch die enorm hohe Elastizität der einzelnen Fäden oder Garne, die aus einem vernetzten Silikon hergestellt sind, ein Schneiden des Festigkeitsträgers nahezu unmöglich ist. D. h. ein solcher Balg ist in hohem Maße vandalismussicher.

Die Gewichtsersparnis bewirkt darüber hinaus auch geringere Transportkosten, und was sehr wesentlich ist, auch ein insgesamt geringeres Fahrzeuggewicht. Darüber hinaus bedeuten weniger Falten oder Wellen auch einen erleichterten und schnelleren Aufbau eines solchen Balges. Das heißt, die Herstellung eines solchen Balges ist wesentlich kostengünstiger.

Anhand der Zeichnungen wird die Erfindung nachstehend beispielhaft näher erläutert.
- Fig. 1: zeigt schematisch einen Wellen- oder Faltenbalg als Teil eines Übergangs zwischen zwei gelenkig miteinander verbundenen Fahrzeugen;
- Fig. 2: zeigt einen Ausschnitt aus Fig. 1 in vergrößerter Darstellung;
- Fig. 3: zeigt eine Ausführung eines Verbindungselementes zwischen zwei gelenkig miteinander verbundenen Fahrzeugteilen.

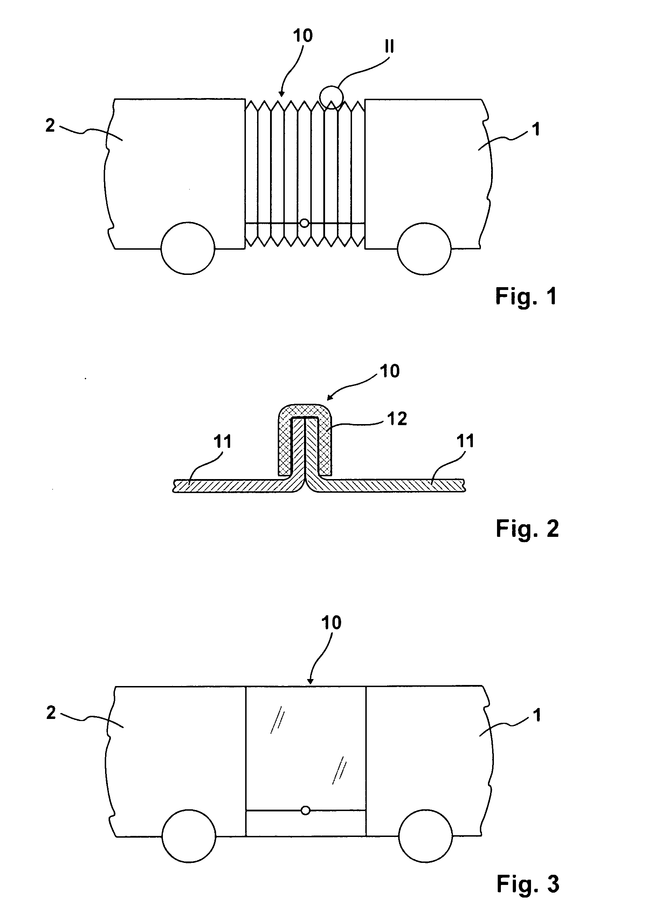

Wie sich aus der Figurendarstellung ergibt, sind die Fahrzeuge jeweils mit 1 und 2 bezeichnet. Gemäß der Fig. 1 befindet sich zwischen den Fahrzeugteilen 1 und 2 der mit 10 bezeichnete Balg, der in herkömmlicher Weise ausgebildet ist, allerdings erheblich weniger Falten oder Wellen aufweist als dies bei einem herkömmlichen Balg der Fall ist. Dies deshalb, weil das Material des Balges, das im Wesentlichen durch den mit einem Silikonkautschuk beschichteten Festigkeitsträger aus Fäden oder Garnen auf Basis eines Silikonkautschuks gebildet wird, wesentlich dehnfähiger ist als das Material für die Wellen oder Falten bei einem herkömmlichen Balg. Ein solchermaßen hergestellter Balg weist eine Dehnfähigkeit zwischen 100 und 400 % bezogen auf den Ausgangszustand auf, also den neutralen Zustand, was schlussendlich bewirkt, dass ein solcher Balg mit weit weniger Falten oder Wellen auskommt als dies bei einem herkömmlichen Balg der Fall ist. Das heißt, die einzelnen die Falten oder Wellen 11 bildenden Materialbahnen stellen die erforderliche Dehnung beispielsweise bei einer Kurvenfahrt nicht durch die durch die Falten oder Wellen gebildete Reserve bereit, sondern durch die Dehnung der die einzelnen Falten oder Wellen bildenden Materialstreifen 11 aus dem hochelastischen beschichteten Festigkeitsträger.

Die einzelnen Materialstreifen sind durch umlaufende Rahmenleisten 12 gehalten, wie sich dies ebenfalls in Anschauung von Fig. 2 ergibt. Bei der Darstellung gemäß Fig. 3 ist der Balg 10 als tunnelartiges Verbindungselement insgesamt aus einem flächenförmigen Festigkeitsträger ausgebildet. Das heißt, es sind keine Wellen oder Falten vorgesehen, was die Möglichkeit eröffnet aufgrund der möglichen Dehnung von 100 bis 400 % die entsprechende Reserve allein durch die Dehnung des Materials aus sich heraus bereitzustellen.

## Patentansprüche

1. Flächenförmiges oder im Querschnitt kasten- oder U-förmig umlaufendes Verbindungselement zwischen zwei gelenkig miteinander verbundenen Fahrzeugen oder Vordach einer Fluggastbrücke odertreppe, wobei das Verbindungselement oder das Vordach mindestens einen flächenförmigen mit einem Elastomer beschichteten Festigkeitsträger aufweist, wobei der Festigkeitsträger eine Vielzahl von Fäden oder Garnen aufweist,
**dadurch gekennzeichnet,**
**dass** die Fäden oder Garne einen vernetzten Silikonkautschuk aufweisen.

2. Flächenförmiges oder im Querschnitt kasten- oder U-förmig umlaufendes Verbindungselement oder Vordach nach Anspruch 1,
**dadurch gekennzeichnet,**
**dass** die Fäden oder Garne Modul-Werte im Bereich von 20 bis 100^{cN}/800 %, insbesondere von ca. 20 - 80^{cN}/800 % Dehnung aufweisen.

3. Flächenförmiges oder im Querschnitt kasten- oder U-förmig umlaufendes Verbindungselement oder Vordach nach einem der voranstehenden Ansprüche,
**dadurch gekennzeichnet,**
**dass** Fäden oder Garne eine Ummantelung aus einem Kunststoff aufweisen, der nicht dem Material der Seele des Fadens oder Garns des Festigkeitsträgers entspricht.

4. Flächenförmiges oder im Querschnitt kasten- oder U-förmig umlaufendes Verbindungselement oder Vordach nach Anspruch 3,
**dadurch gekennzeichnet,**
**dass** die Ummantelung durch einen den Faden oder das Garn umgebenden weiteren Faden gebildet ist.

5. Flächenförmiges oder im Querschnitt kasten- oder U-förmig umlaufendes Verbindungselement oder Vordach nach Anspruch 3 oder 4,
**dadurch gekennzeichnet,**
**dass** die Ummantelung des Fadens oder Garns aus nicht oder schwer entflammbaren Kunststoff ausgebildet ist.

6. Flächenförmiges oder im Querschnitt kasten- oder U-förmig umlaufendes Verbindungselement oder Vordach nach einem der voranstehenden Ansprüche,
**dadurch gekennzeichnet,**
**dass** der flächenförmige Festigkeitsträger als Gewebe, Gewirk oder Gelege ausgebildet ist.

7. Flächenförmiges oder im Querschnitt kasten- oder U-förmig umlaufendes Verbindungselement oder Vordach nach einem der voranstehenden Ansprüche,
**dadurch gekennzeichnet,**
**dass** der flächenförmige Festigkeitsträger als Gewebe mindestens in einer Raumrichtung elastisch nachgiebig ausgebildet ist.

8. Flächenförmiges oder im Querschnitt kasten- oder U-förmig umlaufendes Verbindungselement oder Vordach nach einem der voranstehenden Ansprüche,
**gekennzeichnet durch**
eine wellen- oder faltenbalgförmige Ausbildung.

9. Im Querschnitt kasten- oder U-förmig umlaufendes Verbindungselement nach Anspruch 8,
**dadurch gekennzeichnet,**
**dass** das im Querschnitt kasten- oder U-förmig umlaufende Verbindungselemente als Teil eines Übergangs zwischen zwei gelenkig miteinander verbundenen Fahrzeugen als Balg ausgebildet ist.

10. Flächenförmiges Verbindungselement nach Anspruch 8,
**dadurch gekennzeichnet,**
**dass** das flächenförmige Verbindungselement als Seitenwand und/oder Decke und/oder Boden zwischen zwei gelenkig miteinander verbundenen Fahrzeugen ausgebildet ist.

11. Vordach nach Anspruch 8,
**dadurch gekennzeichnet,**
**dass** das Vordach als Balg ausgebildet ist.

12. Flächenförmiges oder im Querschnitt kasten- oder U-förmig umlaufendes Verbindungselement oder Vordach nach einem der Ansprüche 9 bis 11,
**dadurch gekennzeichnet,**
**dass** das flächenförmige Verbindungselement oder der Balg als Teil eines Übergangs zwischen zwei gelenkig miteinander verbundenen Fahrzeugen oder das balgartig ausgebildete Vordach einer Fluggastbrücke oder -treppe im Bereich des Übergangs von einer Falte oder Welle zur benachbarten Falte oder Welle im Querschnitt U-profilartige Balgrahmen aufweist.

## Claims

1. A connection element between to vehicles joined together with an articulated connection which is flat or box or U-shaped in cross-section or a porch of a passenger bridge or stairs, wherein the connection element or the porch has at least one flat reinforcement coated with an elastomer, wherein the reinforcement has a plurality of threads or yarns,
**characterized in that**
the threads or yarns comprise a cross-linked silicone rubber.

2. The connection element which is flat or box or U-shaped in cross-section or the porch according to claim 1,
**characterized in that**
the threads or yarns have modulus values in the range of 20 to 100^{cN}/800%, more specifically of approx. 20-80^{cN}/800% elongation.

3. The connection element which is flat or box or U-shaped in cross-section or the porch according to one of the afore-mentioned claims, **characterized in that**
threads and yarns have a covering made of a synthetic material that does not correspond to the material of the core of the thread or yarn of the reinforcement.

4. The connection element which is flat or box or U-shaped in cross-section or the porch according to claim 3,
**characterized in that**
the covering is formed by another thread surrounding the thread or the yarn.

5. The connection element which is flat or box or U-shaped in cross-section or the porch according to claim 3 or 4,
**characterized in that**
the covering of the thread or yarn is made of a non flammable or practically not flammable synthetic material.

6. The connection element which is flat or box or U-shaped in cross-section or the porch according to one of the afore-mentioned claims,
**characterized in that**
the flat reinforcement is designed as a woven, a knitted or a non-crimp fabric.

7. The connection element which is flat or box or U-shaped in cross-section or the porch according to one of the afore-mentioned claims,
**characterized in that**
as a woven fabric, the flat reinforcement is designed to be elastically yielding in at least one spatial direction.

8. The connection element which is flat or box or U-shaped in cross-section or the porch according to one of the afore-mentioned claims,
**characterized by**
a corrugated or folded bellows type design.

9. The connection element which is flat or box or U-shaped in cross-section according to claim 8,
**characterized in that**
as part of a gangway between two articulately connected vehicles, the connection element that is box or U-shaped in cross-section is designed as a bellows.

10. The flat connection element according to claim 8,
**characterized in that**
the flat connection element is designed as a lateral wall and/or a ceiling and/or a floor between two articulately connected vehicles.

11. The porch according to claim 8,
**characterized in that**
the porch is designed as a bellows.

12. The connection element which is flat or box or U-shaped in cross-section or the porch according to one of the claims 9 to 11,
**characterized in that**
the flat connection element or the bellows, as part of a gangway between two articulately connected vehicles, or the bellows-type porch of a passenger bridge or stairs has bellows frames with a U-shaped cross-section in the area of the transition from one fold or corrugation to the adjacent fold or corrugation.

## Revendications

1. Élément de liaison plan ou ayant une section transversale fermée ou en U, entourant deux véhicules articulés couplés entre eux, ou avant-toit, ou pont pour passagers d'avion, ou escalier, dans lequel l'élément de liaison ou l'avant-toit comporte au moins un support de fixation revêtu d'un élastomère, dans lequel le support de fixation présente une pluralité de filaments ou de fils,
**caractérisé en ce que,**
les filaments ou les fils comportent un caoutchouc de silicone réticulé.

2. Élément de liaison plan ou ayant une section transversale fermée ou en U, ou avant-toit, selon la revendication 1,
**caractérisé en ce que,**
les filaments ou les fils ont une valeur du module de fil située dans le secteur de 20 à 100^{cN}/800%, en particulier ont une dilatation d'environ 20-80^{cN}/800%.

3. Élément de liaison plan ou ayant une section transversale fermée ou en U, ou avant-toit, selon l'une des revendications précédentes, **caractérisé en ce que,**
les filaments ou les fils comportent un revêtement en matière synthétique, qui ne correspond pas au matériau de l'âme du fil ou du filament du support de fixation.

4. Élément de liaison plan ou ayant une section transversale fermée ou en U, ou avant-toit, selon la revendication 3,
**caractérisé en ce que,**
le matériau du revêtement est constitué d'un fil complémentaire entourant ledit filament ou ledit fil.

5. Élément de liaison plan ou ayant une section transversale fermée ou en U, ou avant-toit, selon les revendications 3 ou 4,
**caractérisé en ce que,**
le revêtement du fil ou du filament est réalisé au moyen d'une matière synthétique ininflammable ou difficilement inflammable.

6. Élément de liaison plan ou ayant une section transversale fermée ou en U, ou avant-toit, selon l'une des revendications précédentes,
**caractérisé en ce que,**
le support de fixation de forme plane est constitué d'un tissu, d'un maillage ou d'un collage.

7. Élément de liaison plan ou ayant une section transversale fermée ou en U, ou avant-toit, selon l'une des revendications précédentes,
**caractérisé en ce que,**
le support de fixation de forme plane est extensible élastiquement dans au moins une direction spatiale.

8. Élément de liaison plan ou ayant une section transversale fermée ou en U, ou avant-toit, selon l'une des revendications précédentes,
**caractérisé par,**
une structure en forme de soufflet à vagues ou à plis.

9. Élément de liaison ayant une section transversale fermée ou en U, selon la revendication 8,
**caractérisé en ce que,**
ledit élément de liaison ayant une section transversale fermée ou en U, constitue une partie d'une traverse entre deux véhicules articulés couplés entre eux, est constitué d'un soufflet.

10. Élément de liaison plan selon la revendication 8,
**caractérisé en ce que,**
ledit élément de liaison plan est agencé pour constituer une paroi latérale, et/ou un plafond, et/ou un sol entre deux véhicules articulés couplés entre eux.

11. Avant-toit selon la revendication 8,
**caractérisé en ce que,**
l'avant-toit est en forme de soufflet.

12. Élément de liaison plan ou ayant une section transversale fermée ou en U, entourant deux véhicules articulés couplés entre eux, ou avant-toit selon l'une des revendications 9 à 11,
**caractérisé en ce que,**
l'élément de liaison plan, ou le soufflet, en tant que partie du passage entre deux véhicules articulés couplés entre eux ou l'avant-toit en forme de soufflet d'un pont pour passagers d'avions ou escalier, comporte, dans le domaine du passage, un pli ou une vague jusqu'au pli voisin ou vague voisine, un cadre de soufflet ayant un profil en U dans sa section transversale.
